# EUROPEAN PATENT APPLICATION

(11) **EP 0 638 474 A1**
(43) Date of publication of application: **15.02.1995**
(21) Application number: 94112584.1
(22) Date of filing: 11.08.1994
(51) Int. Cl.: B62H 5/00, E05B 67/00

(54) **Locking device**

(30) Priority: 11.08.1993 JP 220637/93
(71) Applicant: KABUSHIKI KAISHA AIAISHI, Iwata-shi, Shizuoka-ken (JP)
(72) Inventor: Okada, Mitsuhiro, Iwata-shi, Shizuoka-ken (JP); Muramatsu, Yasuhiro, Iwata-shi, Shizuoka-ken (JP); Yamaoka, Hiroshi, Iwata-shi, Shizuoka-ken (JP)
(74) Representative: Grünecker, Kinkeldey, Stockmair & Schwanhäusser Anwaltssozietät

(57) **Abstract**

This invention relates to a locking device (11) comprising a locking chain body (10) having a plurality of connecting members (12) pivotably connected to each other at adjacent end portion (13) thereof through a pivot connection, including a pivot shaft (15). At least two adjacent surfaces (14) of adjacent end portions (13) are elastically pressed against each other.

## Description

This invention relates to a locking device for locking vehicles such as motorcycles, bicycles etc., while parking, comprising a locking chain body having a plurality of connecting members pivotably connected to each other at adjacent end portions thereof through a pivot connection including a pivot shaft.

Such locking devices have been disclosed in Japanese Unexamined Patent Publication Sho62-59783 or in US-4,760,718.

Such a locking device is provided with a locking chain body having a plurality of rod members arranged in longitudinal succession and having opposite ends of two adjacent ones of the rod members piled on each other and connected with each other through a pivot shaft pivotally relative to each other, so that, when the locking chain body is formed like a loop by pivoting these rod members, both ends of the locking chain body may be connectable with each other. Further, this locking device is provided with a lock portion for locking both ends of the locking chain body as connected.

When intending to prevent the parked vehicle from getting stolen, at least one end portion of the locking chain body above is made penetratable, for example, one wheel with one end thereof or midsection thereof held with hands. Then, this locking chain body is formed like a loop enclosing a fixed member of the vehicle, eg., the front fork of the motorcycle, or a fixed structure such as a utility pole, and both ends of the locking chain body are connected with each other and is locked with the lock portion in the connected state. Thus, the locking chain body is locked in a state with the vehicle wheel prevented from revolving, and the vehicle is prevented from getting stolen.

Hereupon, when intending to make one end of the locking chain body penetrate the wheel, since this end is in a free state, the rod member at this end may be unexpectedly pivoted in an unintended direction by its own weight or by a shock caused by hitting against the wheel.

If the end rod member is unexpectedly pivoted as described above, the penetrating operation above is hindered, and the operation for attaching the locking device on the object becomes troublesome.

Accordingly it is an objective of the present invention to provide a locking device which can be handled more easily and attached to the object to be locked without difficulties.

According to the present invention this objective is performed in that at least two adjacent surfaces of adjacent end portions are elastically pressed against each other.

Accordingly when the connecting members pivot relative to each other about the axis of the pivot connection and the adjacent surfaces are in frictional contact with each other and the connecting members are prevented from being unexpectedly pivotated about the pivot connection by its own weight when the axis of the pivot connection is a little inclined from the vertical or by shock when the locking chain body hits against something.

Preferred embodiments of the present invention are laid down in the further dependent claims.

Hereinafter the present invention is explained in greater detail by means of several embodiments thereof in conjunction with the accompanying drawings, wherein:
Fig. 1 shows a locking device according to a first preferred embodiment of the invention in a sectional view taken along the line 1-1 of the Fig. 3,
Fig. 2 is an overall perspective view of the locking device according to the embodiment shown in Fig. 1,
Fig. 3 is a top view of the locking device according to the embodiment of Fig.1,
Fig. 4 shows the locking device according to the embodiment of Fig. 1 in a sectional view taken along the line 4-4 of Fig. 1,
Fig. 5 shows a locking device according to a second embodiment in a view corresponding to Fig. 1,
Fig. 6 shows the locking device according to the embodiment of Fig. 5 in a sectional view corresponding to the view of Fig. 4,
Fig. 7 shows a locking device according to a further embodiment in a sectional view corresponding to the view of Fig. 1,
Fig. 8 shows a locking device according to a further embodiment of the invention in a sectional view corresponding to the view of Fig. 1,

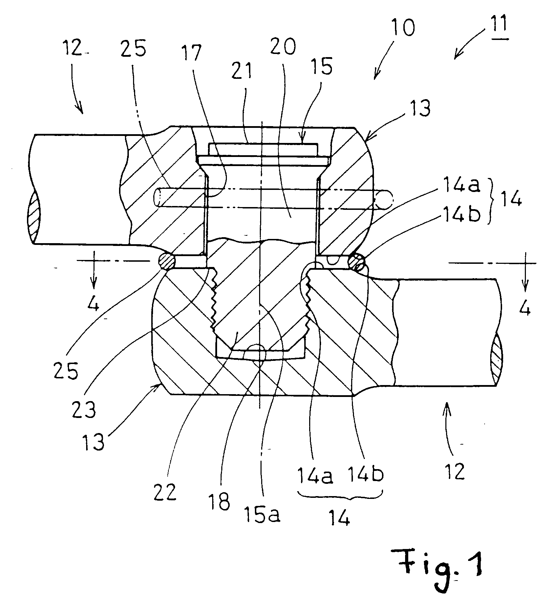

Figs. 1 through 4 show a locking device according to a first embodiment.

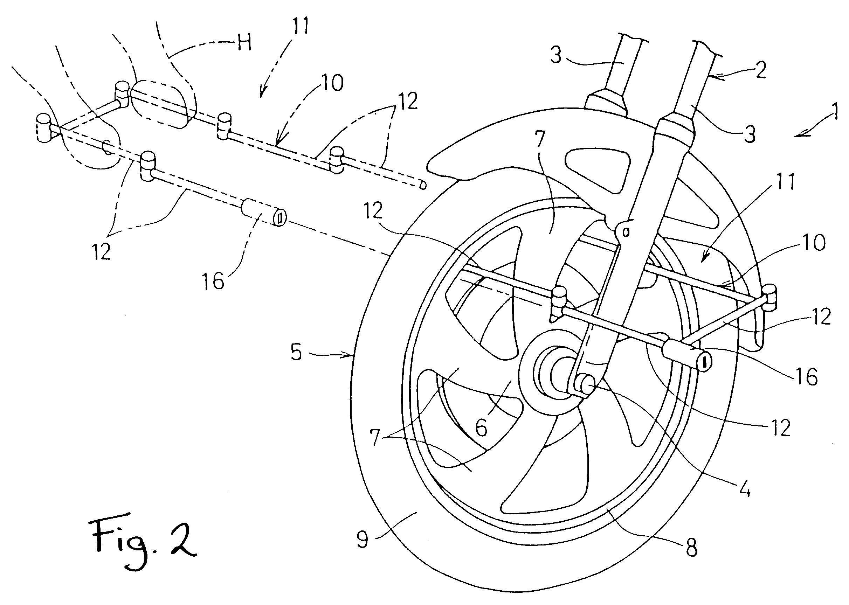

Fig. 2 shows a locking device 11 depicted in conjunction with a motorcycle 1, an example of saddle-riding type vehicles, having a front fork 2 mounted on its front. The front fork 2 has paired left and right fork tubes 3. A wheel shaft 4 is suspended on the lower ends of both fork tubes 3, and a front wheel 5 is borne on the front shaft 4. The front wheel 5 is composed of a hub 6, spokes 7, rim 8 and tire 9.

The anti-theft locking device 11 locks the front wheel 5 in a state prevented from revolving when the motorcycle 1 is parked.

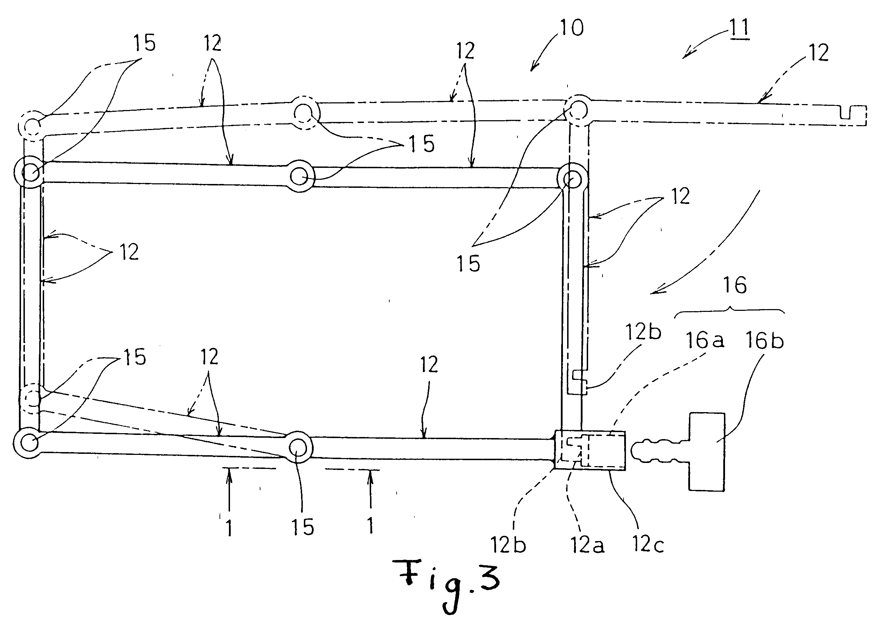

As shown in Figs.2 and 3, the locking device 11 has a locking chain body 10 composed of six rod members 12 connected in succession. The opposite end portions 13 of two adjacent rod members 12 are piled on each other. Both mating surfaces 14 of these end portions 13 through which these end portions 13 are piled on each other have a pivot shaft 15 perpendicularly penetrating themselves so that both end portions 13 may be pivotally connected through the pivot shaft 15 and both rod members 12 may be pivoted relative to each other about the axis 15a of the pivot shaft 15. By thus pivoting the rod members 12 about the axis 15a, the locking chain body 10 can be folded or unfolded, and these rod members 12 and the pivot shafts 15 constitute the locking chain body 10. Both rod members 12 and pivot shafts 15 are made of chromium-molybdenum steel and are case-hardened to obtain a sufficient hardness.

On one of both ends of the locking chain body 10 is fixed an outer cylinder 12c having an engaging hole 12a formed therethrough at one end thereof, while an engaging projection 12b is formed on the other end. The locking chain body 10 is so constructed that the engaging hole 12a and the engaging projection 12b can be disengageably engaged when the locking chain body 10 is formed like a predetermined loop shown in Fig.3 by pivoting the rod members 12.

The locking device 11 is provided with a lock portion 16 capable of locking, by a locking operation, the engaging hole 12a and the engaging projection 12b in the engaged state when engaged with each other. The lock portion 16 is composed of a cylinder lock 16a contained in the outer cylinder 12c and a key 16b capable of locking or unlocking the cylinder lock 16a.

To prevent the parked motorcycle 1 from getting stolen, the locking chain body 10 is folded to become generally U-shaped as shown in Figs.2 and 3 in dash-and-double-dotted lines by pivoting the the midway rod members 12 relative to each other, and then the U-shaped locking chain body 10 is made penetrate the front wheel between spokes 7 with the the midsection of the locking chain body 10 held with hands H.

Next, the rod members 12 are pivoted relative to each other so that the locking chain body 10 may become a predetermined loop and the fork tubes 3 may be contained within the loop of the locking chain body 10 as shown in Fig.3 in dash-and-single-dotted lines.
[0026]
Next, as shown in Figs.2 and 3 in solid lines, the engaging hole 16a and the engaging projection 16b are engaged with each other and are locked by the lock portion 16 as engaged. Thus, the front wheel 5 is locked in a state prevented from revolving, and the motorcycle 1 is prevented from getting stolen.

The pivotal connection of the adjacent rod members 12 is described hereafter in further detail referring to Fig.1.

One of opposite end portions 13 of two adjacent rod members 12 has a through hole 17 bored therethrough, and the other has a bottomed screw hole 18 bored therein as shown in Fig.1. The pivot shaft 15 is composed of a shank portion 20, tapered flange type head portion 21 formed on one end thereof and a screw portion 22 formed on the other end thereof and having an outer diameter smaller than that of the shank portion 20 so that a step surface 23 may be formed between these two portions.

When connecting two adjacent rod members 12 at the end portions thereof with each other, the shank portion 20 and the head portion 21 are inserted in the through hole 17, while the screw portion 22 is screwed into the screw hole 18. By thus screwing, the step surface 23 of the pivot shaft 15 is pressed against the mating surface 14 of the rod member 12 having the screw hole 18 and the pivot shaft 15 is fixed thereon, while the rod member 12 having the through hole 17 is pivotable about the axis 15a of the shank portion 20. Part of the inner surface of the through hole 17 is taper-fitted over the tapered head portion 21 to prevent the rod member 12 from coming off the pivot shaft 15. A slight gap 25 is provided between both mating surfaces 14 to make pivotal movements of both rod members 12 smooth.

The pivot shaft 15 has a tool engaging projection 21a formed on the head portion 21 thereof and this projection 21a is elliptic as seen along the axis 15a thereof. That is, to screw the pivot shaft 15 into or out of the screw hole 18 requires a special tool.

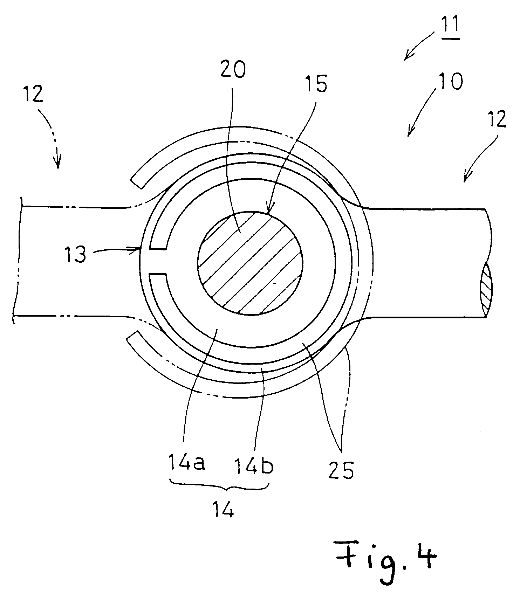

As shown in Figs.1 and 4, the end surface of each end portion 13 of each rod member 12 in the longitudinal direction is formed as a semi-circle generally centered on the axis 15a of the pivot shaft 15. On the other hand, both mating surfaces 14 are formed as circles having the same size and generally centered on the axis 15a of the pivot shaft 15. Each mating surface 14 has a flat central portion 14a, and its outer edge portion 14b has an arcuate convex side sectional view.

To bring both mating surfaces 14 into elastic contact with each other, an elastic member 25 is provided. The elastic member 25 is formed by bending a wire rod having a circular cross section and made of spring material such as stainless steel, phosphor bronze, etc., into a C-shape. In this case, the elastic member 25 is elastically and wedge-wise pressed against both mating surfaces 14 radially inward of the pivot shaft 15 between both outer edge portions 14b of both mating surfaces 14 so that both mating surfaces 14 may be elastically pressed against each other although indirectly through the elastic member 25.

Therefore, when both rod members 12 pivotally connected with each other through a pivot shaft 15 are pivoted about the axis 15a of the pivot shaft 15, both mating surfaces 14 are brought into frictional contact with each other, and, by the elastic member 25, the inner surface of the through hole 17 and the head portion 21 taper-fitted over each other are brought into frictional contact with each other, and the pivoting above is restrained.

To prevent the parked motorcycle 1 from getting stolen while being parked, one end of the the locking chain body 10 constituting the locking device 11 is made penetrate the front wheel 5 with the other end thereof or the midsection thereof held generally horizontally with hands H as shown in Fig.2 in dash-and-double-dotted lines.

In this case, even if the axis 15a of the pivot shaft 15 is a little inclined from the vertical state or the end of the locking chain body 10 hits against the front wheel 5 and recieves a shock, since mutual pivoting of both rod members 12 is restrained as described above, the rod member 12 is prevented from being unexpectedly pivoted about the pivot shaft 15 by its own weight or shock.

The elastic member 25 is mounted, or dismounted from, between both outer edge portions 14b in a state expanded as shown in dash-and-double-dotted lines in Figs.1 and 4 while being slided along the outer surface of the end portion 13 of the rod member 12.

Succeeding drawings show other embodiments. Descriptions are omitted for the structures and functions of these other embodiments common to those of Embodiment 1 above by assigning common reference symbols to the common elements in the drawings, and only differences are described hereafter.

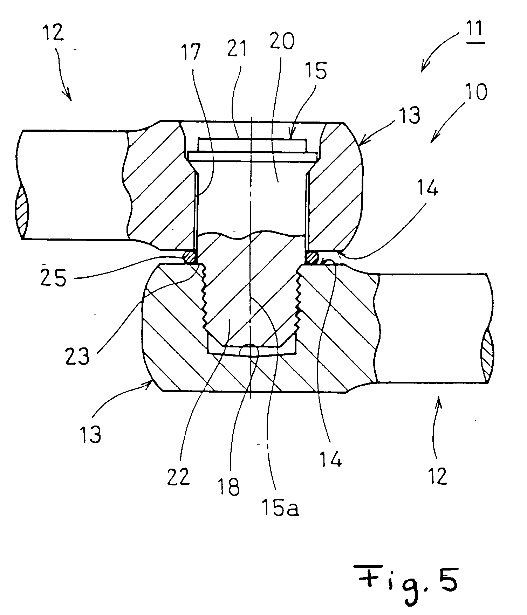

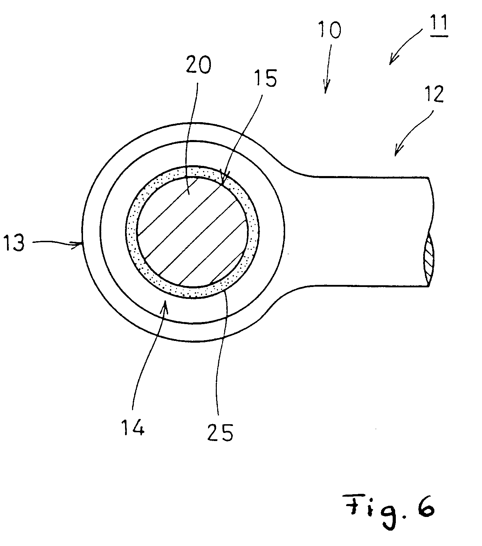

Figs. 5 and 6 show a locking device according to a second embodiment.

In this embodiment, an elastic member 25 having a circular cross section, an O-ring made of rubber, is interposed between both mating surfaces 14, and this elastic member 25 is fitted over the pivot shaft 15.

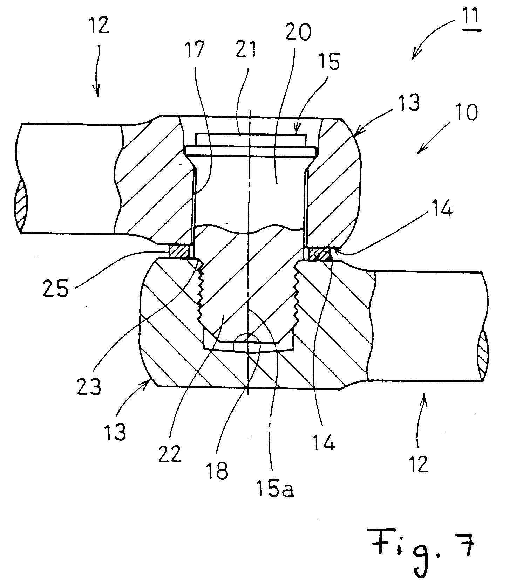

Fig. 7 shows a third embodiment of a locking device.

In this embodiment, an elastic member 25 having a rectangular cross section, an O-ring made of rubber, is interposed between both mating surfaces 14, and this elastic member 25 is fitted over the pivot shaft 15 leaving some gap therebetween.

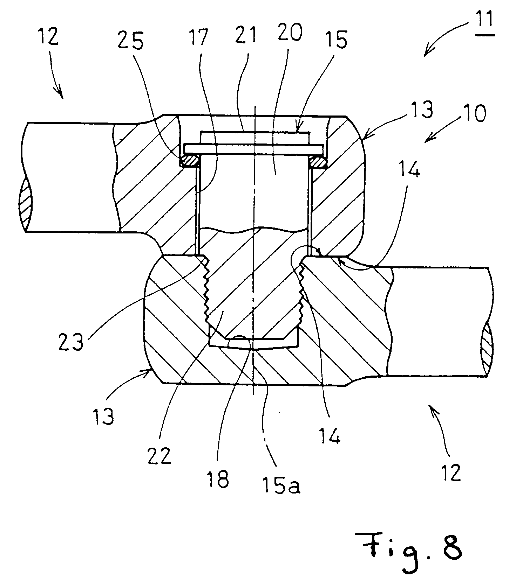

Fig. 8 shows a locking device according to a further embodiment.

In this embodiment, an elastic member 25 having a circular cross section, an O-ring made of rubber, is interposed in the taper-fitting portion between the inner surfaces of the through hole 17 and the head portion 21 of the pivot shaft 15, and both mating surfaces 14 are directly and elastically pressed against each other through this elastic member 25.

Although the description above is for the structure shown in drawings, the elastic member 25 may be either a spring washer or a web washer.The material for the elastic member 25 may be resin.

Although the description above is for the structure shown in drawings, the pivot shaft 15 may be fixed on one mating surface 14 by making the diameters of the shank portion 20 and the screw portion 22 equal to each other and pressing the tip end of the screw portion 22 against the inner bottom of the bottomed screw hole 18. With this structure, stress is prevented from being concentrated in the nook portion between the screw portion 22 and the step portion 23, and the breakage of the pivot shaft 15 is securely prevented.

Further, the rod members 12 constituting the locking chain body 10 may be not straight but curved, e.g., J-shaped, and its number may be only two. The lock portion 16 may be such as a padlock which locks both ends of the locking chain body 10 without engaging them with each other. The structure with which the vehicle is tied to prevent it from getting stolen may be a house door, gate door, etc.

The above described preferred embodiments of the locking device are provided with a locking chain body having a plurality of rod members and having opposite ends of two adjacent ones of the rod members piled on each other and connected with each other through a pivot shaft pivotally relative to each other so that the locking chain body may be foldable and unfoldable, and further provided with a lock portion for disconnectably connecting both ends of the locking chain body through a locking operation wherein both mating surfaces through which the end portions of two adjacent rod members are piled on each other are elastically pressed against each other.

Therefore, when both rod members pivotally connected with each other pivot relative to each other about the axis of the pivot shaft, both mating surfaces are in frictional contact with each other and are restrained from pivoting relative to each other.

So, when making one end of the locking chain body constituting the locking device penetrate some region of an object with the other end thereof or the midsection thereof held with hands to prevent the object from getting stolen, even if the axis of the pivot shaft is a little inclined from the vertical state or the penetrating end of the locking chain body hits against the object and recieves a shock, the rod member is prevented from being unexpectedly pivoted about the pivot shaft by its own weight or shock.

Consequently, it is not required to keep the axis of the pivot shaft strictly vertical and it is allowed for the penetrating end of the locking chain body to be given some shock by its hitting against the object when the locking chain body is made penetrate the object, and this penetrating operation becomes as much easier. That is, the locking device can be attached to the object more easily.

Further, since the mating surfaces pivoting relative to each other about the pivot shaft are elastically pressed against each other as described above, looseness is prevented from getting generated between both mating surfaces.

Therefore, the locking device is prevented from rattling and noise generation is prevented. Further, this invention is effective in that the locking device can be attached or detached quietly.

## Claims

1. Locking device comprising a locking chain body (10) having a plurality of connecting members (12) pivotably connected to each other at adjacent end portions (13) thereof through a pivot connection including a pivot shaft (15), **characterised in that** at least two adjacent surfaces (14) of adjacent end portions (13) are elastically pressed against each other.

2. Locking device as claimed in claim 1, **characterised in that** the connecting members are formed by rod members (12), which are piled on each other with adjacent end portions thereof.

3. Locking device as claimed in claim 1 or 2, **characterised in that** the pivot shaft is formed by a bolt (15) fixedly connected to one of said adjacent end portions (13).

4. Locking device as claimed in at least one of claims 1 to 3, **characterised in that** an elastic member (25) is disposed between said adjacent surfaces (14).

5. Locking device as claimed in at least one of claims 1 to 4, **characterised in that** the elastic member (25) is generally C-shaped and is elastically and wedgewise pressed radially outwards by outer edge portions (14b) of both adjacent surfaces (14).

6. Locking device as claimed in claim 5, **characterised in that** the elastic member (25) has a circular cross-section and is made of a spring material.

7. Locking device as claimed in at least one of claims 1 to 4, **characterised in that** the elastic member is an O-ring (25) surrounding the pivot shaft (15) and interposed between both adjacent surfaces (14).

8. Locking device as claimed in at least one of claims 1 to 4, **characterised in that** the elastic member is an O-ring (25) which is interposed between a head portion (21) of the pivot shaft (15) and an adjacent surface of the adjacent end portion (13).

9. Locking device as claimed in at least one of claims 1 to 8, **characterised in that** the pivot shaft (15) is formed by a bolt screwed into a screw hole (18) provided in one of said adjacent end portions (13) of the rod members (12) and has a shank portion (20) which is inserted in a through hole (17) of the other one of said adjacent end portions (13), said shank portion having a larger diameter than said screw hole (18) and a greater length than said through hole (17), thus limiting the pressure on the elastic member (25) between the mating surfaces (14).
